# EUROPEAN PATENT APPLICATION

(11) **EP 4 390 724 A1**
(43) Date of publication of application: **26.06.2024**
(21) Application number: 23217437.5
(22) Date of filing: 18.12.2023
(51) Int. Cl.: G06F 16/53, G06F 16/583

(54) **SYSTEMS AND METHODS FOR IMAGE SEARCH**

(30) Priority: 20.12.2022 US 202263433945 P
(71) Applicant: Palantir Technologies Inc., Denver, CO 80202 (US)
(72) Inventor: LI, Yuntao, Denver, 80202 (US); AHUJA, Arjun, Denver, 80202 (US); BALUCHA, Filip, Denver, 80202 (US); WARHURST, Henry, Denver, 80202 (US); HEILMANN, Johannes, Denver, 80202 (US); KRISHNAN, Rayan Myer, Denver, 80202 (US); NONO, Ryan, Denver, 80202 (US); SURYA, Rick, Denver, 80202 (US); CHALASANI, Saivasudha, Denver, 80202 (US); PACHIGOLLA, Satwik Anjaneya, Denver, 80202 (US); VOJDANOVSKI, Vlado, Denver, 80202 (US)
(74) Representative: Sayer, Robert David

(57) **Abstract**

Systems and methods for image search are provided. In some embodiments, a method for image search includes receiving a query image, recognizing one or more text strings on the query image, generating a query vector based on the query image, conducting a first image search based at least in part on the query vector to generate one or more first candidate images, conducting a second image search based at least in part on the one or more recognized text strings to generate one or more second candidate images, and generating a query output based on the one or more first candidate images and the one or more second candidate images.

## Description

### CROSS REFERENCE TO RELATED APPLICATIONS

This application claims priority to U.S. Provisional Application No. 63/433,945, filed December 20, 2022, incorporated by reference herein for all purposes.

### TECHNICAL FIELD

Certain embodiments of the present disclosure are directed to image search systems including hosts and networking devices. More particularly, some embodiments of the present disclosure provide systems and methods for searching images based on a query image.

### BACKGROUND

Amount of data being collected or stored by users and/or companies grows rapidly every day. It is becoming more complex to search among the historical corpus of data. Generally, querying the corpus is done by performing string matching for a given input string using one or more search technologies. However, it is challenging to search for images with a particular object in the corpus of data using a query image.

Hence it is highly desirable to improve the techniques for searching data repositories including both text and images using a query image.

### SUMMARY

The scope of protection sought for various embodiments of the invention is set out by the independent claims. Certain embodiments of the present disclosure are directed to image search systems. More particularly, some embodiments of the present disclosure provide systems and methods for searching images based on a query image.

According to some embodiments, a method for image search includes receiving a query image, recognizing one or more text strings on the query image, generating a query vector based on the query image, conducting a first image search based at least in part on the query vector to generate one or more first candidate images, conducting a second image search based at least in part on the one or more recognized text strings to generate one or more second candidate images, and generating a query output based on the one or more first candidate images and the one or more second candidate images. The method is performed using one or more processors.

According to certain embodiments, a method for image search includes receiving a query image, the query image representing a query object, receiving a query electromagnetic signal, the query electromagnetic signal being associated with the query object, generating a query vector based on the query image, conducting a first image search based at least in part on the query vector to generate one or more first candidate images, conducting a second image search based at least in part on the query electromagnetic signal to generate one or more second candidate images, and generating a query output based on the one or more first candidate images and the one or more second candidate images. The method is performed using one or more processors.

According to certain embodiments, a method for image search includes receiving an indication of a first computing model, coupling the first computing model to an image search pipeline, receiving a query image, generating a query vector based on the query image, conducting a first image search using the image search pipeline based at least in part on the query vector to generate one or more first candidate images, and generating an output associated with the one or more first candidate images and the one or more second candidate images. The method is performed using one or more processors.

Depending upon embodiment, one or more benefits may be achieved. These benefits and various additional objects, features and advantages of the present disclosure can be fully appreciated with reference to the detailed description and accompanying drawings that follow.

### BRIEF DESCRIPTION OF THE DRAWINGS

FIG. 1 is a simplified diagram showing a method for image search according to one embodiment of the present disclosure.
FIG. 2 is a simplified diagram showing a method for image search according to one embodiment of the present disclosure.
FIG. 3 is a simplified diagram showing a method for image search according to one embodiment of the present disclosure.
FIG. 4 is a simplified diagram showing an example of an operating environment in which an image search system may be implemented according to one embodiment of the present disclosure.
FIG. 5 is a simplified diagram showing an example query image including a query object and a text string according to one embodiment of the present disclosure.
FIG. 6 is a simplified diagram showing an example interface for a query output including a query output of candidate images and an explanation according to one embodiment of the present disclosure.
FIG. 7 is a simplified diagram showing a computing system for implementing an image search system according to one embodiment of the present disclosure.

### DETAILED DESCRIPTION

Conventional systems and methods are often not capable of efficiently searching database consisting of both text and images using an image query. Conventional systems and methods typically perform string matching for a given input string (e.g., a query text). However, it is challenging to search for images with a particular object in the corpus of data using a query image.

Various embodiments of the present disclosure can achieve benefits and/or improvements by a computing system for image search, for example, using a query vector representing a query image. In some embodiments, benefits include significant improvements, including, for example, increased efficiency in conducting a search using the query vector. In certain embodiments, other benefits include improved search functionality by allowing user to query using an image and/or conducting the search using both the query vector representing the image and semantic meaning (e.g., object descriptions) extracted from the image. In some embodiments, systems and methods are configured to searching for images of an object (e.g., a person, a thing, a vehicle, etc.) that is depicted in a query image..

Unless otherwise indicated, all numbers expressing feature sizes, amounts, and physical properties used in the specification and claims are to be understood as being modified in all instances by the term "about." Accordingly, unless indicated to the contrary, the numerical parameters set forth in the foregoing specification and attached claims are approximations that can vary depending upon the desired properties sought to be obtained by those skilled in the art utilizing the teachings disclosed herein. The use of numerical ranges by endpoints includes all numbers within that range (e.g., 1 to 5 includes 1, 1.5, 2, 2.75, 3, 3.80, 4, and 5) and any number within that range.

Although illustrative methods may be represented by one or more drawings (e.g., flow diagrams, communication flows, etc.), the drawings should not be interpreted as implying any requirement of, or particular order among or between, various steps disclosed herein. However, some embodiments may require certain steps and/or certain orders between certain steps, as may be explicitly described herein and/or as may be understood from the nature of the steps themselves (e.g., the performance of some steps may depend on the outcome of a previous step). Additionally, a "set," "subset," or "group" of items (e.g., inputs, algorithms, data values, etc.) may include one or more items and, similarly, a subset or subgroup of items may include one or more items. A "plurality" means more than one.

As used herein, the term "based on" is not meant to be restrictive, but rather indicates that a determination, identification, prediction, calculation, and/or the like, is performed by using, at least, the term following "based on" as an input. For example, predicting an outcome based on a particular piece of information may additionally, or alternatively, base the same determination on another piece of information. As used herein, the term "receive" or "receiving" means obtaining from a data repository (e.g., database), from another system or service, from another software, or from another software component in a same software. In certain embodiments, the term "access" or "accessing" means retrieving data or information, and/or generating data or information.

According to some embodiments, systems and methods are directed to searching for images of an object (e.g., a person, a thing, a vehicle, etc.) that is depicted in a query image. In certain embodiments, systems and methods use images as queries to search for additional images. In some embodiments, systems and methods include an interface (e.g., user interface, software interface) to allow the upload of one or more images, also referred to as query images, to conduct a search for one or more query objects, also referred to as target objects, that are depicted in the one or more query images. In certain embodiments, a query object (e.g., a target object) includes a thing and/or a location. In some embodiments, a software interface includes an application programming interface (API), a web service interface, retrieving information from a file, retrieving information from a data repository, and/or the like. In certain embodiments, the search results include one or more result images. In some embodiments, at least a part of the search results includes an image of the one or more query objects.

According to certain embodiments, the image search system conducts a search using other query inputs, such as text strings extracted from the query images, electromagnetic and other types of signals. In certain embodiments, a text string includes a sequence of alphanumerical letters, one or more symbols, a text stream, a word, a phrase, a sentence, and/or the like. In some embodiments, the text strings is translated (e.g., translated from French to English) before being used for searching.

According to some embodiments, the image search system includes an interface (e.g., user interface, software interface) to provide explainability, such as a description of the query object (e.g., a blue car, a specific store, etc.), a heatmap indicating a focus (e.g., focusing on a car, focusing on a road, etc.), and/or the like.

Some embodiments of the present disclosure are directed to the systems and methods for using images to query a corpus of data (e.g., law-enforcement data, military data). In certain embodiments, a corpus of data is of an organization (e.g., an agency, a company, a group of organizations). In some embodiments, the organization has a large corpus (e.g., historical corpus) of data consisting of both text and images. In certain embodiments, querying the corpus is typically done by performing string matching for a given input string using one or more search technologies. In some embodiments, the image search system enables a user to query using an image, instead of a string. For example, a user can upload an image of an unknown aircraft and quickly discover whether any previous investigations and/or records involved the same aircraft.

In certain embodiments, the image search system extracts semantic meanings from images in a corpus of data to allow searches by text associated with the images. For example, a blue car can be searched by using a term "blue car" even if the text "blue car" is not indexed in the image search system.

In some embodiments, the image search system is flexible, allowing user-defined and/or user-selected computing models (e.g., machine learning models) to be used. In certain embodiments, the image search system has an interface for computing model selections and/or configurations. In some embodiments, a model, also referred to as a computing model, includes a model to process data. A model includes, for example, an artificial intelligence (AI) model, a machine learning (ML) model, a deep learning (DL) model, a computer vision model, a text extraction model, an image processing model, an algorithm, a rule, other computing models, and/or a combination thereof.

According to some embodiments, the image search system may not match images solely based on the input image (e.g., the query image) alone. In certain embodiments, one or more text strings may also be extracted from the input image, for example, using optical character recognition (OCR), and/or translated from other languages into English using a computing model. In some embodiments, this reduces the number of searches the user must manually type. In certain embodiments, the translation capability is valuable when the image search includes images of different languages (e.g., German, French).

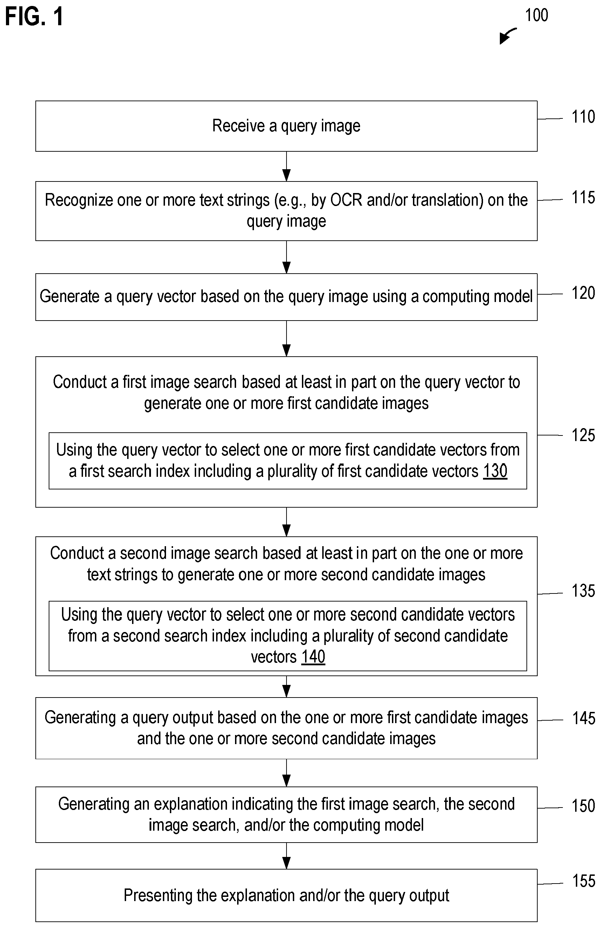

FIG. 1 is a simplified diagram showing a method 100 for image search according to one embodiment of the present disclosure. FIG. 1 is merely an example, which should not unduly limit the scope of the claims. One of ordinary skill in the art would recognize many variations, alternatives, and modifications. The method 100 for searching image includes processes 110, 115, 120, 125, 130, 135, 140, 145, 150, and 155 that are performed using one or more processors. Although the above has been shown using a selected group of processes for the method, there can be many alternatives, modifications, and variations. For example, some of the processes may be expanded and/or combined. Other processes may be inserted to those noted above. Depending upon the embodiment, the sequence of processes may be interchanged with others replaced. Further details of these processes are found throughout the present disclosure.

In some embodiments, some or all processes (e.g., steps) of the method 100 are performed by a system (e.g., the computing system 700). In certain examples, some or all processes (e.g., steps) of the method 100 are performed by a computer and/or a processor directed by a code. For example, a computer includes a server computer and/or a client computer (e.g., a personal computer). In some examples, some or all processes (e.g., steps) of the method 100 are performed according to instructions included by a non-transitory computer-readable medium (e.g., in a computer program product, such as a computer-readable flash drive). For example, a non-transitory computer-readable medium is readable by a computer including a server computer and/or a client computer (e.g., a personal computer, and/or a server rack). As an example, instructions included by a non-transitory computer-readable medium are executed by a processor including a processor of a server computer and/or a processor of a client computer (e.g., a personal computer, and/or server rack).

According to some embodiments, at process 110, the system is configured to receive a query image. In certain embodiments, the query image includes a representation of one or more query objects (e.g., a car, an object, a place, etc.). In some embodiments, the query image includes a representation of one or more objects that are not query objects.

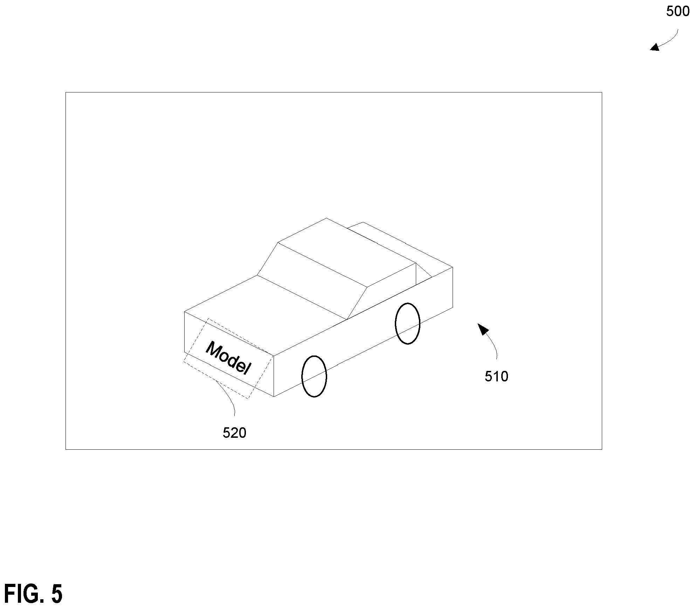

According to certain embodiments, at process 115, the system is configured to recognize one or more text strings on the query image. In some embodiments, the system uses a text extraction model to recognize the one or more text strings. In certain embodiments, the text extraction model includes an optical character recognition (OCR) model. In some embodiments, the system uses a language model to translate the one or more recognized text strings from a first language to a second language different from the first language. In certain embodiments, the system translates the one or more text strings using a machine-learning model. In some embodiments, the system translates the one or more text strings using a machine-learning model for translation. For example, the query image includes a handwritten note in German, and the system extracts the text strings in German and translates the text strings to English. As an example, the system uses the text strings in English for further searches. FIG. 5 shows an example query image 500 including a query object 510 and a text string 520.

According to some embodiments, at process 120, the system generates a query vector based on the query image using a computing model. In certain embodiments, the computing model includes a first machine-learning model trained using a first set of training data and designed to identify a first type of object or a first specific object. In some embodiments, the computing model includes a second machine-learning model trained using a second set of training data and designed to identify a second type of object or a second specific object.

In certain embodiments, the query vector represents one or more characteristics of the query image. For example, the query image may be represented by pixel data representing respective values for pixels of the query image. For example, the one or more characteristics of the query image may comprise one or more of shapes, colors, textures and/or features for one or more regions and/or object types represented by the pixel data of the query image. The query vector may comprise a mathematical (e.g., numerical) representation of at least some of said characteristics, for example representing at least some content of the query image. In some embodiments, the query vector is converted from the query image. In certain embodiments, the query vector depends on the computing model used. In some embodiments, the query vector is a first query vector generated based on the query image using a first computing model, and the query vector is a second query vector generated based on the query image using a second computing model, where the first query vector is different from the second query vector, and the first computing model is different from the second computing model. In certain embodiments, the computing model includes at least a part of an image search pipeline. In some embodiments, the image search pipeline includes one or more computing models. In certain embodiments, the image search pipeline includes one or more computing models running sequentially and/or parallelly.

According to certain embodiments, at process 125, the system conducts a first image search based at least in part on the query vector to generate one or more first candidate images. In some embodiments, at process 130, the first image search includes using the query vector to select one or more first candidate vectors from a search index, where the search index includes a plurality of vectors and each vector of the plurality of vectors is corresponding to an image. In some embodiments, the one or more selected first candidate vectors are corresponding the one or more first candidate images. In certain embodiments, the first image search includes applying the computing model to the plurality of first candidate images to generate a plurality of first candidate vectors.

In some embodiments, the first image search includes calculating a vector distance between a candidate vector and the query vector. In certain embodiments, the system selects one or more first candidate vectors from the plurality of first candidate vectors based on a vector distance between a corresponding candidate vector and the query vector. In some embodiments, the system selects one or more first candidate vectors based on a threshold. In certain embodiments, the threshold is a threshold for the number of selected first candidate vectors. In some embodiments, the threshold is a threshold for the vector distance, which describes the similarity of the two images. In certain embodiments, the system ranks the plurality of first candidate vectors (e.g., corresponding to candidate images) via corresponding vector distances and selects the one or more first candidate images based at least in part on the ranking.

According to some embodiments, at process 135, the system conducts a second image search based at least in part on the one or more recognized text strings to generate one or more second candidate images. In certain embodiments, the system selects the one or more second candidate images using the one or more recognized text strings and/or translated text strings. In some embodiments, the image search pipeline includes the text extraction model, the OCR model, and/or the machine-learning model for translation.

According to certain embodiments, the first image search and/or the second image search are conducted in a designated data repository (e.g., a corpus for an organization). In some embodiments, at process 140, the second image search includes using the query vector to select one or more second candidate vectors from a search index. As described above, in certain embodiments, the search index includes the plurality of vectors and each vector of the plurality of vectors is corresponding to an image in the designated data repository. In some embodiments, the one or more selected second candidate vectors are corresponding to the one or more second candidate images. In certain embodiments, the second image search includes applying the computing model to the plurality of second candidate images to generate a plurality of second candidate vectors. In some embodiments, the first image search and/or the second image search are conducted in one or more designated data repositories. In such embodiments, each designated data repository may have its own search index for images stored in the corresponding designated data repository.

In some embodiments, the second image search includes calculating a vector distance between a candidate vector and the query vector. In certain embodiments, the system selects one or more second candidate vectors from the plurality of second candidate vectors based on a vector distance between a corresponding candidate vector and the query vector. In some embodiments, the system selects one or more second candidate vectors based on a threshold. In certain embodiments, the threshold is a threshold for the number of selected candidate vectors. In some embodiments, the threshold is a threshold for the vector distance, which describes the similarity of the two images. In certain embodiments, the system ranks the plurality of second candidate vectors (e.g., corresponding to candidate images) via corresponding vector distances and selects the one or more second candidate images based at least in part on the ranking.

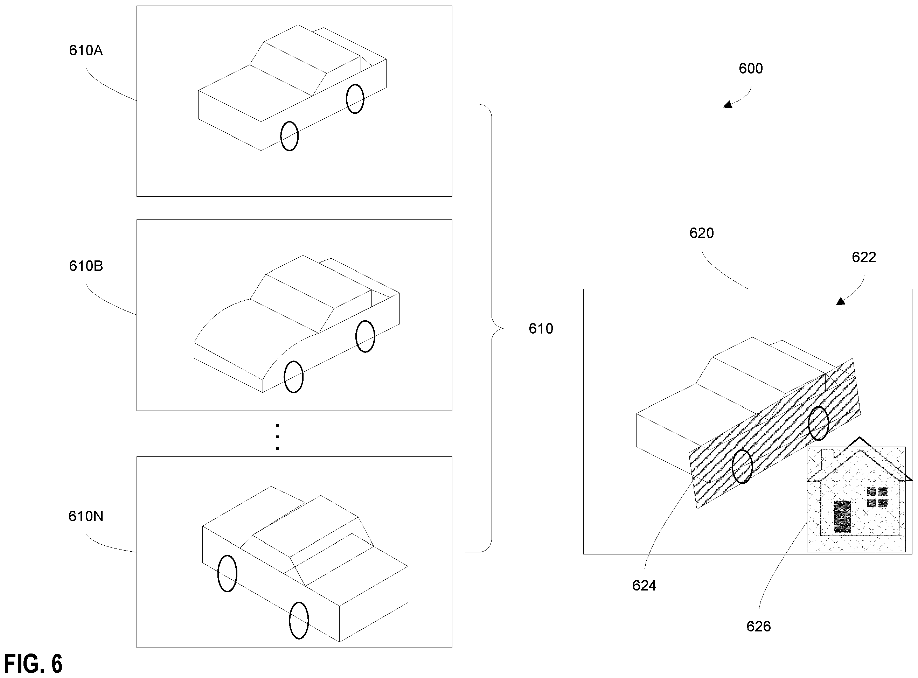

According to some embodiments, at process 145, the system generates a query output based on the one or more first candidate images and the one or more second candidate images. In certain embodiments, the query output may comprise the one or more first candidate images and/or the one or more second candidate images. In certain embodiments, at process 150, the system generates an explanation of the first image search, the second image search, and/or the computing model. In some embodiments, the explanation includes a heatmap representing one or more focus aspects of the image search(es), the computing model and/or the image search pipeline. In certain embodiments, at process 155, the system presents the explanation and/or the query output. In certain embodiments, the explanation includes a heatmap overlaid on the query image showing one or more focused aspects and one or more unfocused aspects. FIG. 6 shows an example interface for a query output 600 including the query output of candidate images 610 (e.g., image 610A, image 610B, ..., image 610N) and an explanation 620. For example, the explanation 620 is a heatmap showing a focused aspect 624 and an unfocused aspect 626. For example, FIG. 6 shows the search paying attention to features of a vehicle 622, which is the query object.

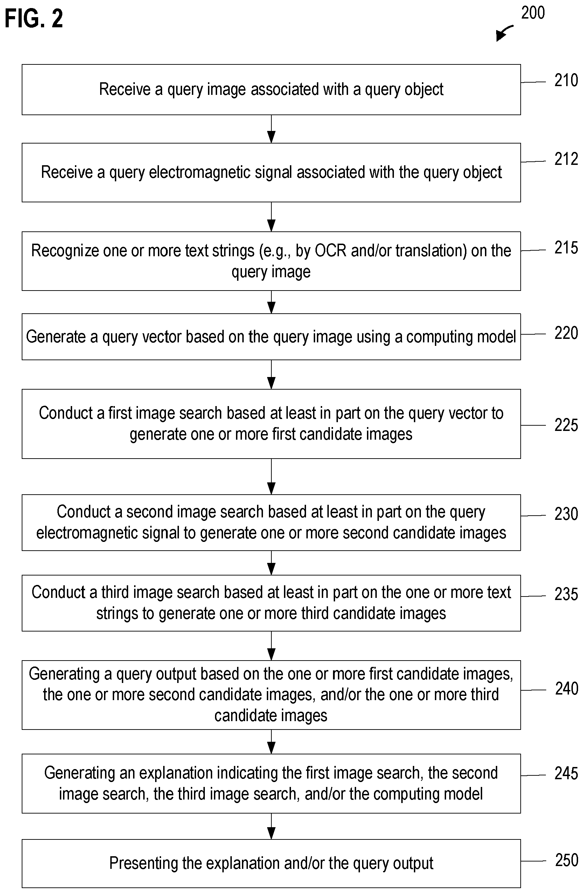

FIG. 2 is a simplified diagram showing a method 200 for image search according to one embodiment of the present disclosure. FIG. 2 is merely an example, which should not unduly limit the scope of the claims. One of ordinary skill in the art would recognize many variations, alternatives, and modifications. The method 200 for searching image includes processes 210, 212, 215, 220, 225, 230, 235, 240, 245, and 250. Although the above has been shown using a selected group of processes for the method 200 for image search, there can be many alternatives, modifications, and variations. For example, some of the processes may be expanded and/or combined. Other processes may be inserted into those noted above. Depending upon the embodiment, the sequence of processes may be interchanged with others replaced. Further details of these processes are found throughout the present disclosure.

In some embodiments, some or all processes (e.g., steps) of the method 200 are performed by a system (e.g., the computing system 700). In certain examples, some or all processes (e.g., steps) of the method 200 are performed by a computer and/or a processor directed by a code. For example, a computer includes a server computer and/or a client computer (e.g., a personal computer). In some examples, some or all processes (e.g., steps) of the method 200 are performed according to instructions included by a non-transitory computer-readable medium (e.g., in a computer program product, such as a computer-readable flash drive). For example, a non-transitory computer-readable medium is readable by a computer including a server computer and/or a client computer (e.g., a personal computer, and/or a server rack). As an example, instructions included by a non-transitory computer-readable medium are executed by a processor including a processor of a server computer and/or a processor of a client computer (e.g., a personal computer, and/or server rack).

According to some embodiments, at process 210, the system is configured to receive a query image associated with a query object. In certain embodiments, the query image includes a representation of one or more query objects (e.g., a car, an object, a place, etc.). In some embodiments, the query image includes a representation of one or more objects that are not query objects (e.g., road, building). In some embodiments, at process 212, the system receives a query electromagnetic signal, where the query electromagnetic signal is associated with the query object. In some embodiments, the query electromagnetic signal is from an infrared image or a radar recording of, or which includes, the query object.

According to certain embodiments, at process 215, the system is configured to recognize one or more text strings on the query image. In some embodiments, the system uses a text extraction model to recognize the one or more text strings. In certain embodiments, the text extraction model includes an optical character recognition (OCR) model. In some embodiments, the system uses a language model to translate the one or more recognized text strings from a first language to a second language different from the first language. In certain embodiments, the system translates the one or more text strings using a machine-learning model. In some embodiments, the system translates the one or more text strings using a machine-learning model for translation. For example, the query image includes a handwritten note in German, and the system extracts the text strings in German and translates the text strings to English. As an example, the system uses the text strings in English for further search. FIG. 5 shows an example query image 500 including a query object 510 and a text string 520.

According to some embodiments, at process 220, the system generates a query vector based on the query image using a computing model. In certain embodiments, the computing model includes a first machine-learning model trained using a first set of training data and designed to identify a first type of object or a first specific object. In some embodiments, the computing model includes a second machine-learning model trained using a second set of training data and designed to identify a second type of object or a second specific object.

In certain embodiments, the query vector represents one or more characteristics of the query image. For example, the query image may be represented by pixel data representing respective values for pixels of the query image. For example, the one or more characteristics of the query image may comprise one or more of shapes, colors, textures and/or features for one or more regions and/or object types represented by the pixel data of the query image. The query vector may comprise a mathematical (e.g., numerical) representation of at least some of said characteristics, for example representing at least some content of the query image. In some embodiments, the query vector is converted from the query image. In certain embodiments, the query vector depends on the computing model used. In some embodiments, the query vector is a first query vector generated based on the query image using a first computing model, and the query vector is a second query vector generated based on the query image using a second computing model, where the first query vector is different from the second query vector, and the first computing model is different from the second computing model. In certain embodiments, the computing model includes at least a part of an image search pipeline. In some embodiments, the image search pipeline includes one or more computing models. In certain embodiments, the image search pipeline includes one or more computing models running sequentially and/or parallelly.

According to certain embodiments, at process 225, the system conducts a first image search based at least in part on the query vector to generate one or more first candidate images. In some embodiments, the first image search includes using the query vector to select one or more first candidate vectors from a search index, where the search index includes a plurality of vectors and each vector of the plurality of vectors is corresponding to an image. In some embodiments, the one or more selected first candidate vectors are corresponding to the one or more first candidate images. In certain embodiments, the first image search includes applying the computing model to the plurality of first candidate images to generate a plurality of first candidate vectors.

In some embodiments, the first image search includes calculating a vector distance between a candidate vector and the query vector. In certain embodiments, the system selects one or more first candidate vectors from the plurality of first candidate vectors based on a vector distance between a corresponding candidate vector and the query vector. In some embodiments, the system selects one or more first candidate vectors based on a threshold. In certain embodiments, the threshold is a threshold for the number of selected first candidate vectors. In some embodiments, the threshold is a threshold for the vector distance, which describes the similarity of the two images. In certain embodiments, the system ranks the plurality of first candidate vectors (e.g., corresponding to candidate images) via corresponding vector distances and selects the one or more first candidate images based at least in part on the ranking.

According to some embodiments, at process 230, the system conducts a second image search based at least in part on the query electromagnetic signal to generate one or more second candidate images and/or one or more query object characteristics. In certain embodiments, the system determines a category of the query object based at least in part on the query electromagnetic signal. For example, the shape of an object as represented by the query electromagnetic signal may be used with an object-recognition model or similar to determine the category of the query object. In some embodiments, the category of the query object includes one or more possible objects, such as a type of obj ects, a type of cars, a type of places, and/or the like. For example, the system determines the category of the query object is an airplane. In some embodiments, going back to process 225, the system conducts the first image search based at least in part on the category of the query object. In certain embodiments, the system identifies one or more characteristics of the query object based on the query electromagnetic signal and conducts the first image search based at least in part on the one or more identified characteristics of the query object.

In some embodiments, the second image search includes using the query vector to select one or more second candidate vectors from the search index. As described above, in certain embodiments, the search index includes a plurality of vectors and each vector of the plurality of vectors is corresponding to an image. In some embodiments, the one or more selected second candidate vectors are corresponding the one or more second candidate images. In certain embodiments, the second image search includes applying the computing model to the plurality of second candidate images to generate a plurality of second candidate vectors.

In some embodiments, the second image search includes calculating a vector distance between a candidate vector and the query vector. In certain embodiments, the system selects one or more second candidate vectors from the plurality of second candidate vectors based on a vector distance between a corresponding candidate vector and the query vector. In some embodiments, the system selects one or more second candidate vectors based on a threshold. In certain embodiments, the threshold is a threshold for the number of selected candidate vectors. In some embodiments, the threshold is a threshold for the vector distance, which describes the similarity of the two images. In certain embodiments, the system ranks the plurality of second candidate vectors (e.g., corresponding to candidate images) via corresponding vector distances and selects the one or more second candidate images based at least in part on the ranking.

According to some embodiments, at process 235, the system conducts a third image search based at least in part on the one or more recognized text strings to generate one or more second candidate images. In certain embodiments, the system selects the one or more third candidate images using the one or more recognized text strings and/or translated text strings. In some embodiments, the image search pipeline includes the text extraction model, the OCR model, and/or the machine-learning model for translation.

According to certain embodiments, the first image search, the second image search and/or the third image search are conducted in a designated data repository (e.g., a corpus for an organization). In some embodiments, the third image search includes using the query vector to select one or more third candidate vectors from the search index. As described above, in certain embodiments, the search index includes a plurality of vectors and each vector of the plurality of vectors is corresponding to an image in the designated data repository. In some embodiments, the one or more selected third candidate vectors are corresponding the one or more third candidate images. In certain embodiments, the third image search includes applying the computing model to the plurality of third candidate images to generate a plurality of third candidate vectors. In some embodiments, the first image search, the second image search, and/or the third image search are conducted in one or more designated data repositories. In such embodiments, each designated data repository may have its own search index for images stored in the corresponding designated data repository.

In some embodiments, the third image search includes calculating a vector distance between a candidate vector and the query vector. In certain embodiments, the system selects one or more third candidate vectors from the plurality of third candidate vectors based on a vector distance between a corresponding candidate vector and the query vector. In some embodiments, the system selects one or more third candidate vectors based on a threshold. In certain embodiments, the threshold is a threshold for the number of selected candidate vectors. In some embodiments, the threshold is a threshold for the vector distance, which describes the similarity of the two images. In certain embodiments, the system ranks the plurality of third candidate vectors (e.g., corresponding to candidate images) via corresponding vector distances and selects the one or more third candidate images based at least in part on the ranking.

According to some embodiments, at process 240, the system generates a query output based on the one or more first candidate images, the one or more second candidate images, and/or the one or more third candidate images. In certain embodiments, the query output may comprise the one or more first candidate images and/or the one or more second candidate images and/or the one or more third candidate images. In certain embodiments, at process 245, the system generates an explanation of the first image search, the second image search, the third image search, and/or the computing model. In some embodiments, the explanation includes a heatmap representing one or more focus aspects of the image search(es), the computing model and/or the image search pipeline. In certain embodiments, at process 250, the system presents the explanation and/or the query output. In certain embodiments, the explanation includes a heatmap overlaid on the query image showing one or more focused aspects and one or more unfocused aspects. FIG. 6 shows an example interface for a query output 600 including the query output of candidate images 610 (e.g., image 610A, image 610B, ..., image 610N) and an explanation 620. For example, the explanation 620 is a heatmap showing a focused aspect 624 and an unfocused aspect 626. For example, FIG. 6 show the search paying attention to features of a vehicle 622, which is the query object.

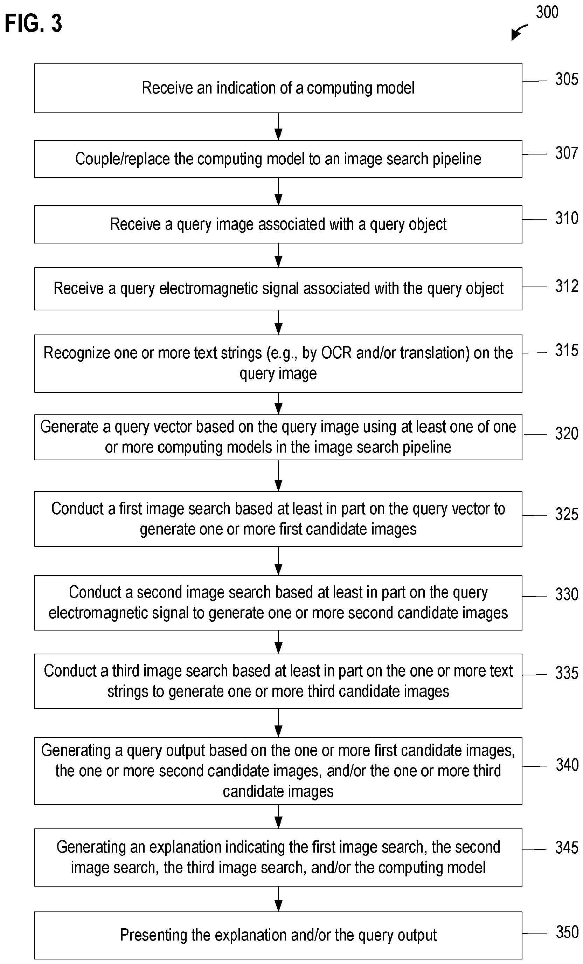

FIG. 3 a simplified diagram showing a method 300 for image search according to certain embodiments of the present disclosure. This diagram is merely an example, which should not unduly limit the scope of the claims. One of ordinary skill in the art would recognize many variations, alternatives, and modifications. The method 300 for image search includes processes 305, 307, 310, 312, 315, 320, 325, 330, 335, 340, 345, and 350. Although the above has been shown using a selected group of processes for the method 300 for image search, there can be many alternatives, modifications, and variations. For example, some of the processes may be expanded and/or combined. Other processes may be inserted into those noted above. Depending upon the embodiment, the sequence of processes may be interchanged with others replaced. Further details of these processes are found throughout the present disclosure.

In some embodiments, some or all processes (e.g., steps) of the method 300 are performed by a system (e.g., the computing system 700). In certain examples, some or all processes (e.g., steps) of the method 300 are performed by a computer and/or a processor directed by a code. For example, a computer includes a server computer and/or a client computer (e.g., a personal computer). In some examples, some or all processes (e.g., steps) of the method 300 are performed according to instructions included by a non-transitory computer-readable medium (e.g., in a computer program product, such as a computer-readable flash drive). For example, a non-transitory computer-readable medium is readable by a computer including a server computer and/or a client computer (e.g., a personal computer, and/or a server rack). As an example, instructions included by a non-transitory computer-readable medium are executed by a processor including a processor of a server computer and/or a processor of a client computer (e.g., a personal computer, and/or server rack).

According to certain embodiments, at process 305, the system receives an indication of a computing model. In some embodiments, the indication may comprise an identifier, e.g., one or more of a name, number and/or version number which identifies the computing model. In some embodiments, at process 307, the system couples the computing model to an image search pipeline and/or replaces one of the computing models with the computing model in the image search pipeline. In certain embodiments, the image search pipeline includes the one or more computing models running sequentially and/or parallelly. In some embodiments, a first computing model is trained using a first set of training data and a second computing model is trained using a second set of training data. In certain embodiments, the system can replace the first computing model in the image search pipeline with the second computing model.

In some embodiments, the system includes a high-level definition (e.g., an interface) of a model. In certain embodiments, the system includes a common interface for computing models used in the image search pipeline. In some embodiments, the image search pipeline includes an image similarity model. In certain embodiments, the image search pipeline includes a text extraction model. In some embodiments, the image search pipeline includes an index model. In certain embodiments, each model of the one or more models in the image search pipeline includes defined interfaces (e.g., definitions of inputs and outputs), such that the one or more models can be coupled and/or replaced.

According to some embodiments, at process 310, the system is configured to receive a query image associated with a query object. In certain embodiments, the query image includes a representation of one or more query objects (e.g., a car, an object, a place, etc.). In some embodiments, the query image includes a representation of one or more objects that are not query objects. In some embodiments, at process 312, the system receives a query electromagnetic signal, where the query electromagnetic signal is associated with the query object. In some embodiments, the query electromagnetic signal is from an infrared image or a radar recording.

According to certain embodiments, at process 315, the system is configured to recognize one or more text strings on the query image. In some embodiments, the system uses a text extraction model to recognize the one or more text strings. In certain embodiments, the text extraction model includes an optical character recognition (OCR) model. In some embodiments, the system uses a language model to translate the one or more recognized text strings from a first language to a second language different from the first language. In certain embodiments, the system translates the one or more text strings using a machine-learning model. In some embodiments, the system translates the one or more text strings using a machine-learning model for translation. For example, the query image includes a handwritten note in German, and the system extracts the text strings in German and translates the text strings to English. As an example, the system uses the text strings in English for further search. FIG. 5 shows an example query image 500 including a query object 510 and a text string 520.

According to some embodiments, at process 320, the system generates a query vector based on the query image using at least one of the one or more computing models in the image search pipeline. In certain embodiments, the computing model includes a first machine-learning model trained using a first set of training data and designed to identify a first type of object or a first specific object. In some embodiments, the computing model includes a second machine-learning model trained using a second set of training data and designed to identify a second type of object or a second specific object.

In certain embodiments, the query vector represents one or more characteristics of the query image. For example, the query image may be represented by pixel data representing respective values for pixels of the query image. For example, the one or more characteristics of the query image may comprise one or more of shapes, colors, textures and/or features for one or more regions and/or object types represented by the pixel data of the query image. The query vector may comprise a mathematical (e.g., numerical) representation of at least some of said characteristics, for example representing at least some content of the query image. In some embodiments, the query vector includes a query vector converted from the query image. In certain embodiments, the query vector depends on the computing model used. In some embodiments, the query vector is a first query vector generated based on the query image using a first computing model, and the query vector is a second query vector generated based on the query image using a second computing model, where the first query vector is different from the second query vector, and the first computing model is different from the second computing model. In certain embodiments, the computing model includes at least a part of an image search pipeline. In some embodiments, the image search pipeline includes one or more computing models. In certain embodiments, the image search pipeline includes one or more computing models running sequentially and/or parallelly.

According to certain embodiments, at process 325, the system conducts a first image search based at least in part on the query vector to generate one or more first candidate images. In some embodiments, the first image search includes using the query vector to select one or more first candidate vectors from a search index, where the search index includes a plurality of vectors and each vector of the plurality of vectors is corresponding to an image. In some embodiments, the one or more selected first candidate vectors are corresponding the one or more first candidate images. In certain embodiments, the first image search includes applying the computing model to the plurality of first candidate images to generate a plurality of first candidate vectors.

In some embodiments, the first image search includes calculating a vector distance between a candidate vector and the query vector. In certain embodiments, the system selects one or more first candidate vectors from the plurality of first candidate vectors based on a vector distance between a corresponding candidate vector and the query vector. In some embodiments, the system selects one or more first candidate vectors based on a threshold. In certain embodiments, the threshold is a threshold for the number of selected first candidate vectors. In some embodiments, the threshold is a threshold for the vector distance, which describes the similarity of the two images. In certain embodiments, the system ranks the plurality of first candidate vectors (e.g., corresponding to candidate images) via corresponding vector distances and selects the one or more first candidate images based at least in part on the ranking.

According to some embodiments, at process 330, the system conducts a second image search based at least in part on the query electromagnetic signal to generate one or more second candidate images. In certain embodiments, the system determines a category of the query object based at least in part on the query electromagnetic signal. In some embodiments, the category of the query object includes one or more possible objects, such as a type of obj ects, a type of cars, a type of places, and/or the like. For example, the system determines the category of the query object is an airplane. In some embodiments, going back to process 335, the system conducts the first image search based at least in part on the category of the query object. In certain embodiments, the system identifies one or more characteristics of the query object based on the query electromagnetic signal and conducts the first image search based at least in part on the one or more identified characteristics of the query object.

In some embodiments, the second image search includes using the query vector to select one or more second candidate vectors from the search index. As described above, in certain embodiments, the search index includes the plurality of vectors and each vector corresponds to an image. In some embodiments, the one or more selected second candidate vectors are corresponding the one or more second candidate images. In certain embodiments, the second image search includes applying the computing model to the plurality of second candidate images to generate a plurality of second candidate vectors.

In some embodiments, the second image search includes calculating a vector distance between a candidate vector and the query vector. In certain embodiments, the system selects one or more second candidate vectors from the plurality of second candidate vectors based on a vector distance between a corresponding candidate vector and the query vector. In some embodiments, the system selects one or more second candidate vectors based on a threshold. In certain embodiments, the threshold is a threshold for the number of selected candidate vectors. In some embodiments, the threshold is a threshold for the vector distance, which describes the similarity of the two images. In certain embodiments, the system ranks the plurality of second candidate vectors (e.g., corresponding to candidate images) via corresponding vector distances and selects the one or more second candidate images based at least in part on the ranking.

According to some embodiments, at process 335, the system conducts a third image search based at least in part on the one or more recognized text strings to generate one or more second candidate images. In certain embodiments, the system selects the one or more third candidate images using the one or more recognized text strings and/or translated text strings. In some embodiments, the image search pipeline includes the text extraction model, the OCR model, and/or the machine-learning model for translation.

According to certain embodiments, the first image search, the second image search and/or the third image search are conducted in a designated data repository (e.g., a corpus for an organization). In some embodiments, the third image search includes using the query vector to select one or more third candidate vectors from the search index, where the search index includes a plurality of vectors and each vector of the plurality of vectors is corresponding to an image in the designated data repository. In some embodiments, the one or more selected third candidate vectors are corresponding the one or more third candidate images. In certain embodiments, the third image search includes applying the computing model to the plurality of third candidate images to generate a plurality of third candidate vectors. In some embodiments, the first image search, the second image search, and/or the third image search are conducted in one or more designated data repositories. In such embodiments, each designated data repository may have its own search index for images stored in the corresponding designated data repository.

In some embodiments, the third image search includes calculating a vector distance between a candidate vector and the query vector. In certain embodiments, the system selects one or more third candidate vectors from the plurality of third candidate vectors based on a vector distance between a corresponding candidate vector and the query vector. In some embodiments, the system selects one or more third candidate vectors based on a threshold. In certain embodiments, the threshold is a threshold for the number of selected candidate vectors. In some embodiments, the threshold is a threshold for the vector distance, which describe the similarity of the two images. In certain embodiments, the system ranks the plurality of third candidate vectors (e.g., corresponding to candidate images) via corresponding vector distances and selects the one or more third candidate images based at least in part on the ranking.

According to some embodiments, at process 340, the system generates a query output based on the one or more first candidate images, the one or more second candidate images, and/or the one or more third candidate images. In certain embodiments, the query output may comprise the one or more first candidate images and/or the one or more second candidate images and/or the one or more third candidate images. In certain embodiments, at process 345, the system generates an explanation of the first image search, the second image search, the third image search, and/or the computing model. In some embodiments, the explanation includes a heatmap representing one or more focus aspects of the image search(es), the computing model and/or the image search pipeline. In certain embodiments, at process 350, the system presents the explanation and/or the query output. In certain embodiments, the explanation includes a heatmap overlaid on the query image showing one or more focused aspects and one or more unfocused aspects. FIG. 6 shows an example interface for a query output 600 including the query output of candidate images 610 (e.g., image 610A, image 610B, ..., image 610N) and an explanation 620. For example, the explanation 620 is a heatmap showing a focused aspect 624 and an unfocused aspect 626. For example, FIG. 6 show the search paying attention to features of a vehicle 622, which is the query object.

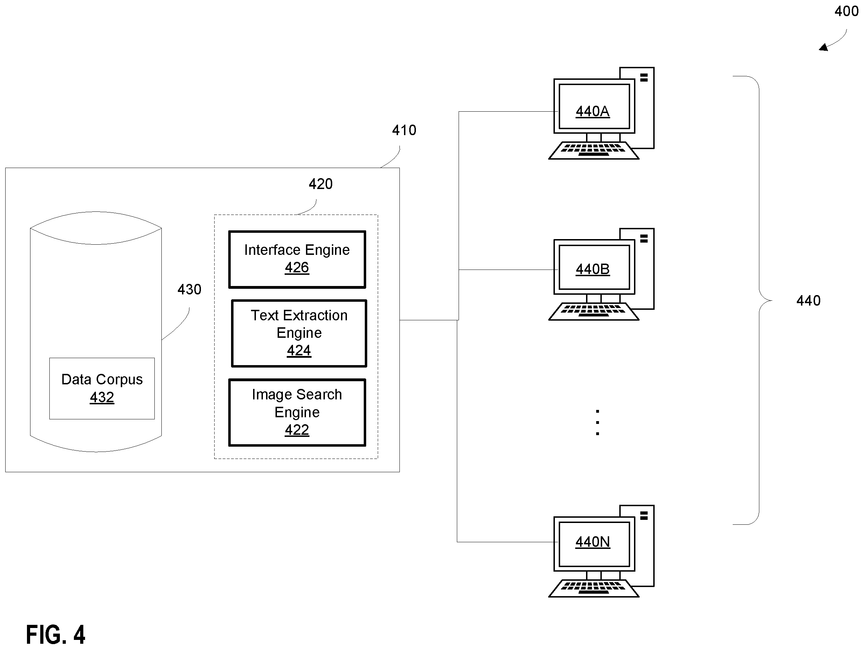

FIG. 4 is an illustrative example of image search environment 400, according to certain embodiments of the present disclosure. FIG. 4 is merely an example, which should not unduly limit the scope of the claims. One of ordinary skill in the art would recognize many variations, alternatives, and modifications. According to certain embodiments, the image search environment 400 includes an image search system 410 and one or more user devices 440 (e.g., user device 440A, user device 440B, ..., 440N). In some embodiments, the image search system 410 includes an image search pipeline 420 and a repository 430. In certain embodiments, the image search pipeline 420 includes an image search engine 422, a text extraction engine 424, and an interface engine 426. In some embodiments, the repository 430 includes a data corpus repository 432. In certain embodiments, one or more user devices 440 include one or more components of the image search system 410.

Although the above has been shown using a selected group of components in the image search environment 400, there can be many alternatives, modifications, and variations. For example, some of the components may be expanded and/or combined. Other components may be inserted into those noted above. Depending upon the embodiment, the arrangement of components may be interchanged with others replaced. Further details of these components are found throughout the present disclosure.

According to certain embodiments, the image search system 410 and/or the image search engine 422 receives an indication of a computing model. In some embodiments, the image search system 410 and/or the image search engine 422 couples the computing model to an image search pipeline and/or replaces one of the computing models with the computing model in the image search pipeline. In certain embodiments, the image search pipeline includes the one or more computing models running sequentially and/or parallelly. In some embodiments, a first computing model is trained using a first set of training data and a second computing model is trained using a second set of training data. In certain embodiments, the image search system 410 and/or the image search engine 422 can replace the first computing model in the image search pipeline with the second computing model.

According to some embodiments, the image search pipeline 420 includes an interface engine 426 for managing computing models used in the image search pipeline. In some embodiments, the image search system 410 and/or the image search pipeline 420 includes a high-level definition (e.g., an interface) of a model. In certain embodiments, the image search system 410 and/or the image search engine 422 includes a common interface for computing models used in the image search pipeline. In some embodiments, the image search pipeline includes an image similarity model. In certain embodiments, the image search pipeline includes a text extraction model. In some embodiments, the image search pipeline includes an index model. In certain embodiments, each model of the one or more models in the image search pipeline includes defined interfaces (e.g., definitions of inputs and outputs), such that the one or more models can be coupled and/or replaced.

According to some embodiments, the image search system 410 and/or the image search engine 422 is configured to receive a query image associated with a query object. In certain embodiments, the query image includes a representation of one or more query objects (e.g., a car, an object, a place, etc.). In some embodiments, the query image includes a representation of one or more objects that are not query objects. In some embodiments, the image search system 410 and/or the image search engine 422 receives a query electromagnetic signal, where the query electromagnetic signal is associated with the query object. In some embodiments, the query electromagnetic signal is from an infrared image or a radar recording.

According to certain embodiments, the image search system 410 and/or the text extraction engine 424 is configured to recognize one or more text strings on the query image. In some embodiments, the image search system 410 and/or the text extraction engine 424 uses a text extraction model to recognize the one or more text strings. In certain embodiments, the text extraction model includes an optical character recognition (OCR) model. In some embodiments, the image search system 410 and/or the text extraction engine 424 uses a language model to translate the one or more recognized text strings from a first language to a second language different from the first language. In certain embodiments, the image search system 410 and/or the text extraction engine 424 translates the one or more text strings using a machine-learning model. In some embodiments, the image search system 410 and/or the text extraction engine 424 translates the one or more text strings using a machine-learning model for translation. For example, the query image includes a handwritten note in German, and the image search system 410 and/or the text extraction engine 424 extracts the text strings in German and translates the text strings to English. As an example, the image search system 410 and/or the image search engine 422 uses the text strings in English for further search. FIG. 5 shows an example query image 500 including a query object 510 and a text string 520.

According to some embodiments, the image search system 410 and/or the image search engine 422 generates a query vector based on the query image using at least one of the one or more computing models in the image search pipeline. In certain embodiments, the computing model includes a first machine-learning model trained using a first set of training data and designed to identify a first type of object or a first specific object. In some embodiments, the computing model includes a second machine-learning model trained using a second set of training data and designed to identify a second type of object or a second specific object.

In certain embodiments, the query vector represents one or more characteristics of the query image. For example, the query image may be represented by pixel data representing respective values for pixels of the query image. For example, the one or more characteristics of the query image may comprise one or more of shapes, colors, textures and/or features for one or more regions and/or object types represented by the pixel data of the query image. The query vector may comprise a mathematical (e.g., numerical) representation of at least some of said characteristics, for example representing at least some content of the query image. In some embodiments, the query vector is converted from the query image. In certain embodiments, the query vector depends on the computing model used. In some embodiments, the query vector is a first query vector generated based on the query image using a first computing model, and the query vector is a second query vector generated based on the query image using a second computing model, where the first query vector is different from the second query vector, and the first computing model is different from the second computing model. In certain embodiments, the computing model includes at least a part of an image search pipeline. In some embodiments, the image search pipeline includes one or more computing models. In certain embodiments, the image search pipeline includes one or more computing models running sequentially and/or parallelly.

According to certain embodiments, the image search system 410 and/or the image search engine 422 conducts a first image search based at least in part on the query vector to generate one or more first candidate images. In some embodiments, the first image search includes using the query vector to select one or more first candidate vectors from a search index, where the search index includes a plurality of vectors and each vector of the plurality of vectors is corresponding to an image. In some embodiments, the one or more selected first candidate vectors are corresponding the one or more first candidate images. In certain embodiments, the first image search includes applying the computing model to the plurality of first candidate images to generate a plurality of first candidate vectors.

In some embodiments, the first image search includes calculating a vector distance between a candidate vector and the query vector. In certain embodiments, the image search system 410 and/or the image search engine 422 selects one or more first candidate vectors from the plurality of first candidate vectors based on a vector distance between a corresponding candidate vector and the query vector. In some embodiments, the image search system 410 and/or the image search engine 422 selects one or more first candidate vectors based on a threshold. In certain embodiments, the threshold is a threshold for the number of selected first candidate vectors. In some embodiments, the threshold is a threshold for the vector distance, which describes the similarity of the two images. In certain embodiments, the image search system 410 and/or the image search engine 422 ranks the plurality of first candidate vectors (e.g., corresponding to candidate images) via corresponding vector distances and selects the one or more first candidate images based at least in part on the ranking.

According to some embodiments, the image search system 410 and/or the image search engine 422 conducts a second image search based at least in part on the query electromagnetic signal to generate one or more second candidate images. In certain embodiments, the image search system 410 and/or the image search engine 422 determines a category of the query object based at least in part on the query electromagnetic signal. In some embodiments, the category of the query object includes one or more possible objects, such as a type of objects, a type of cars, a type of places, and/or the like. For example, the image search system 410 and/or the image search engine 422 determines the category of the query object is an airplane. In some embodiments, the image search system 410 and/or the image search engine 422 conducts the first image search based at least in part on the category of the query object. In certain embodiments, the image search system 410 and/or the image search engine 422 identifies one or more characteristics of the query object based on the query electromagnetic signal and conducts the first image search based at least in part on the one or more identified characteristics of the query object.

In some embodiments, the second image search includes using the query vector to select one or more second candidate vectors from the search index. As described above, the search index includes a plurality of vectors and each vector of the plurality of vectors is corresponding to an image. In some embodiments, the one or more selected second candidate vectors are corresponding the one or more second candidate images. In certain embodiments, the second image search includes applying the computing model to the plurality of second candidate images to generate a plurality of second candidate vectors.

In some embodiments, the second image search includes calculating a vector distance between a candidate vector and the query vector. In certain embodiments, the image search system 410 and/or the image search engine 422 selects one or more second candidate vectors from the plurality of second candidate vectors based on a vector distance between a corresponding candidate vector and the query vector. In some embodiments, the image search system 410 and/or the image search engine 422 selects one or more second candidate vectors based on a threshold. In certain embodiments, the threshold is a threshold for the number of selected candidate vectors. In some embodiments, the threshold is a threshold for the vector distance, which describes the similarity of the two images. In certain embodiments, the image search system 410 and/or the image search engine 422 ranks the plurality of second candidate vectors (e.g., corresponding to candidate images) via corresponding vector distances and selects the one or more second candidate images based at least in part on the ranking.

According to some embodiments, the image search system 410 and/or the image search engine 422 conducts a third image search based at least in part on the one or more recognized text strings to generate one or more second candidate images. In certain embodiments, the image search system 410 and/or the image search engine 422 selects the one or more third candidate images using the one or more recognized text strings and/or translated text strings. In some embodiments, the image search pipeline includes the text extraction model, the OCR model, and/or the machine-learning model for translation.

According to certain embodiments, the first image search, the second image search and/or the third image search are conducted in a designated data repository (e.g., a corpus for an organization, the data corpus 432). In some embodiments, the third image search includes using the query vector to select one or more third candidate vectors from the search index. As described above, the search index includes a plurality of vectors and each candidate vector is corresponding to an image in the designated data respository. In some embodiments, the one or more selected third candidate vectors are corresponding the one or more third candidate images. In certain embodiments, the third image search includes applying the computing model to the plurality of third candidate images to generate a plurality of third candidate vectors.

In some embodiments, the third image search includes calculating a vector distance between a candidate vector and the query vector. In certain embodiments, the image search system 410 and/or the image search engine 422 selects one or more third candidate vectors from the plurality of third candidate vectors based on a vector distance between a corresponding candidate vector and the query vector. In some embodiments, the image search system 410 and/or the image search engine 422 selects one or more third candidate vectors based on a threshold. In certain embodiments, the threshold is a threshold for the number of selected candidate vectors. In some embodiments, the threshold is a threshold for the vector distance, which describes the similarity of the two images. In certain embodiments, the image search system 410 and/or the image search engine 422 ranks the plurality of third candidate vectors (e.g., corresponding to candidate images) via corresponding vector distances and selects the one or more third candidate images based at least in part on the ranking.

According to some embodiments, the image search system 410 and/or the image search engine 422 generates a query output based on the one or more first candidate images, the one or more second candidate images, and/or the one or more third candidate images. In certain embodiments, the image search system 410 and/or the image search engine 422 generates an explanation of the first image search, the second image search, the third image search, and/or the computing model. In some embodiments, the explanation includes a heatmap representing one or more focus aspects of the image search(es), the computing model and/or the image search pipeline. In certain embodiments, the image search system 410 and/or the image search engine 422 presents the explanation and/or the query output. In certain embodiments, the explanation includes a heatmap overlaid on the query image showing one or more focused aspects and one or more unfocused aspects. FIG. 6 shows an example interface for a query output 600 including the query output of candidate images 610 (e.g., image 610A, image 610B, ..., image 610N) and an explanation 620. For example, the explanation 620 is a heatmap showing a focused aspect 624 and an unfocused aspect 626. For example, FIG. 6 show the search paying attention to features of a vehicle 622, which is the query object.

In some embodiments, the repository 430 can include images, computer models, explanations, training data, and/or the like. The repository 430 may be implemented using any one of the configurations described below. A data repository may include random access memories, flat files, XML files, and/or one or more database management systems (DBMS) executing on one or more database servers or a data center. A database management system may be a relational (RDBMS), hierarchical (HDBMS), multidimensional (MDBMS), object oriented (ODBMS or OODBMS) or object relational (ORDBMS) database management system, and the like. The data repository may be, for example, a single relational database. In some cases, the data repository may include a plurality of databases that can exchange and aggregate data by data integration process or software application. In an exemplary embodiment, at least part of the data repository may be hosted in a cloud data center. In some cases, a data repository may be hosted on a single computer, a server, a storage device, a cloud server, or the like. In some other cases, a data repository may be hosted on a series of networked computers, servers, or devices. In some cases, a data repository may be hosted on tiers of data storage devices including local, regional, and central.

In some cases, various components in the image search environment 400 can execute software or firmware stored in non-transitory computer-readable medium to implement various processing steps. Various components and processors of the image search environment 400 can be implemented by one or more computing devices including, but not limited to, circuits, a computer, a cloud-based processing unit, a processor, a processing unit, a microprocessor, a mobile computing device, and/or a tablet computer. In some cases, various components of the image search environment 400 (e.g., the image search system 410, the image search engine 422, the text extraction engine 424, the user devices 440) can be implemented on a shared computing device. Alternatively, a component of the image search environment 400 can be implemented on multiple computing devices. In some implementations, various modules and components of the image search environment 400 can be implemented as software, hardware, firmware, or a combination thereof. In some cases, various components of the image search environment 400 can be implemented in software or firmware executed by a computing device.

Various components of image search environment 400 can communicate via or be coupled to via a communication interface, for example, a wired or wireless interface. The communication interface includes, but is not limited to, any wired or wireless short-range and long-range communication interfaces. The short-range communication interfaces may be, for example, local area network (LAN), interfaces conforming known communications standard, such as Bluetooth^{®} standard, IEEE 802 standards (e.g., IEEE 802.11), a ZigBee^{®} or similar specification, such as those based on the IEEE 802.15.4 standard, or other public or proprietary wireless protocol. The long-range communication interfaces may be, for example, wide area network (WAN), cellular network interfaces, satellite communication interfaces, etc. The communication interface may be either within a private computer network, such as intranet, or on a public computer network, such as the internet.

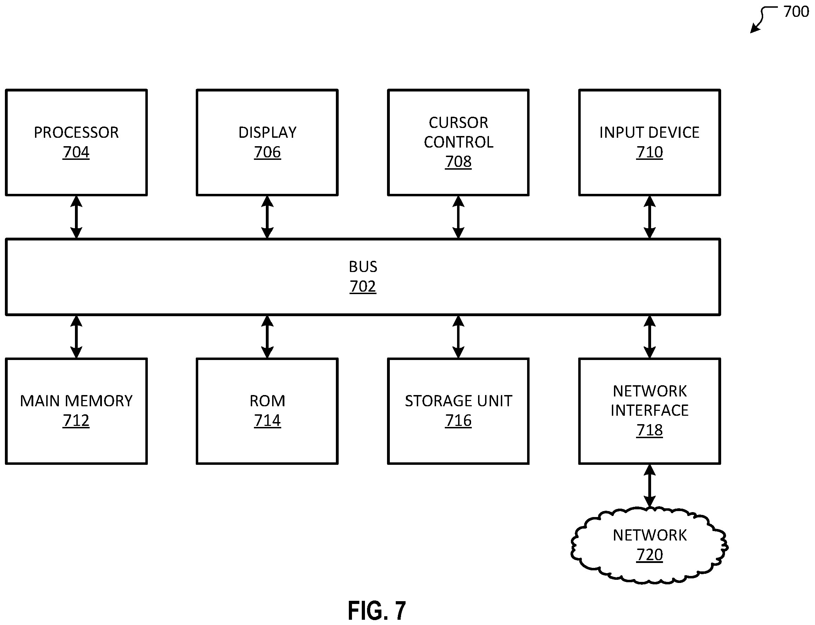

FIG. 7 is a simplified diagram showing a computing system for implementing a system 700 for image search in accordance with at least one example set forth in the disclosure. This diagram is merely an example, which should not unduly limit the scope of the claims. One of ordinary skill in the art would recognize many variations, alternatives, and modifications.

The computing system 700 includes a bus 702 or other communication mechanism for communicating information, a processor 704, a display 706, a cursor control component 708, an input device 710, a main memory 712, a read only memory (ROM) 714, a storage unit 716, and a network interface 718. In some embodiments, some or all processes (e.g., steps) of the methods 100, 200 and/or 300 are performed by the computing system 700. In some examples, the bus 702 is coupled to the processor 704, the display 706, the cursor control component 708, the input device 710, the main memory 712, the read only memory (ROM) 714, the storage unit 716, and/or the network interface 718. In certain examples, the network interface is coupled to a network 720. For example, the processor 704 includes one or more general purpose microprocessors. In some examples, the main memory 712 (e.g., random access memory (RAM), cache and/or other dynamic storage devices) is configured to store information and instructions to be executed by the processor 704. In certain examples, the main memory 712 is configured to store temporary variables or other intermediate information during execution of instructions to be executed by processor 704. For examples, the instructions, when stored in the storage unit 716 accessible to processor 704, render the computing system 700 into a special-purpose machine that is customized to perform the operations specified in the instructions. In some examples, the ROM 714 is configured to store static information and instructions for the processor 704. In certain examples, the storage unit 716 (e.g., a magnetic disk, optical disk, or flash drive) is configured to store information and instructions.

In some embodiments, the display 706 (e.g., a cathode ray tube (CRT), an LCD display, or a touch screen) is configured to display information to a user of the computing system 700. In some examples, the input device 710 (e.g., alphanumeric and other keys) is configured to communicate information and commands to the processor 704. For example, the cursor control component 708 (e.g., a mouse, a trackball, or cursor direction keys) is configured to communicate additional information and commands (e.g., to control cursor movements on the display 706) to the processor 704.

According to some embodiments, a method for image search includes receiving a query image, recognizing one or more text strings on the query image, generating a query vector based on the query image, conducting a first image search based at least in part on the query vector to generate one or more first candidate images, conducting a second image search based at least in part on the one or more recognized text strings to generate one or more second candidate images, and generating a query output based on the one or more first candidate images and the one or more second candidate images. The method is performed using one or more processors. For example, the method is implemented according to at least FIG. 1, FIG. 2, FIG. 3, FIG. 4 and/or FIG. 5.

In some examples, the recognizing one or more text strings on the query image comprises translating the one or more recognized text strings from a first language to a second language different from the first language, wherein the conducting a second image search based at least in part on the one or more recognized text strings comprises conducting the second image search based at least in part on the one or more translated text strings in the second language.

In certain examples, the translating the one or more recognized text strings from a first language to a second language comprises translating the one or more recognized text strings using a machine learning model.

In some examples, the recognizing one or more text strings on the query image comprises recognizing the one or more text strings using an optical character recognition (OCR) algorithm.

In certain examples, the query vector represents one or more characteristics of the query image. For example, the query image may be represented by pixel data representing respective values for pixels of the query image. For example, the one or more characteristics of the query image may comprise one or more of shapes, colors, textures and/or features for one or more regions and/or object types represented by the pixel data of the query image. The query vector may comprise a mathematical (e.g., numerical) representation of at least some of said characteristics, for example representing at least some content of the query image.

In some examples, the conducting a first image search based at least in part on the query vector comprises using the query vector to select one or more candidate vectors from a search index, wherein the search index includes a plurality of candidate vectors, each candidate vector of the plurality of candidate vectors corresponding to a candidate image. The one or more candidate vectors are selected from the plurality of candidate vectors based on a vector distance between a corresponding candidate vector and the query vector.

In certain examples, the one or more candidate vectors are selected based on a threshold.

In some examples, the method further includes ranking the plurality of candidate vectors based on a plurality of vector distances, each vector distance of the plurality of vector distances corresponding to a respective candidate vector and the query vector. The one or more candidate vectors are selected from the plurality of candidate vectors based at least in part on the ranking.

In certain examples, the method further includes generating an explanation of the first image search. The explanation includes a heatmap representing one or more focus aspects.

According to certain embodiments, a method for image search includes receiving a query image, the query image representing a query object, receiving a query electromagnetic signal, the query electromagnetic signal being associated with the query object, generating a query vector based on the query image, conducting a first image search based at least in part on the query vector to generate one or more first candidate images, conducting a second image search based at least in part on the query electromagnetic signal to generate one or more second candidate images, and generating a query output based on the one or more first candidate images and the one or more second candidate images. The method is performed using one or more processors. For example, the method is implemented according to at least FIG. 1, FIG. 2, FIG. 3, FIG. 4 and/or FIG. 5.

In some examples, the query vector represents one or more characteristics of the query image. For example, the query image may be represented by pixel data representing respective values for pixels of the query image. For example, the one or more characteristics of the query image may comprise one or more of shapes, colors, textures and/or features for one or more regions and/or object types represented by the pixel data of the query image. The query vector may comprise a mathematical (e.g., numerical) representation of at least some of said characteristics, for example representing at least some content of the query image.

In certain examples, the conducting a first image search based at least in part on the query vector comprises using the query vector to select one or more vectors from a search index, wherein the search index includes a plurality of candidate vectors, each candidate vector of the plurality of candidate vectors corresponding a candidate image. The one or more vectors are selected based on a vector distance between a corresponding candidate vector and the query vector.

In some examples, the method further includes ranking the plurality of candidate vectors based on a plurality of vector distances, each vector distance of the plurality of vector distances corresponding to a respective candidate vector and the query vector. The one or more candidate vectors are selected from the plurality of candidate vectors based at least in part on the ranking.

In certain examples, the query electromagnetic signal is from an infrared image or a radar recording.

In some examples, the method further includes determining a category of the query object based at least in part on the query electromagnetic signal.

In certain examples, the conducting a first image search comprises conducting the first image search based at least in part on the category of the query object.

According to some embodiments, a method for image search includes receiving an indication of a first computing model, coupling the first computing model to an image search pipeline, receiving a query image, generating a query vector based on the query image, conducting a first image search using the image search pipeline based at least in part on the query vector to generate one or more first candidate images, and generating an output associated with the one or more first candidate images and the one or more second candidate images. The method is performed using one or more processors. For example, the method is implemented according to at least FIG. 1, FIG. 2, FIG. 3, FIG. 4 and/or FIG. 5.

In certain examples, the method further includes receiving an indication of a second computing model, and coupling the second computing model to the image search pipeline, the second computing model replacing the first computing model.

In some examples, the method further includes recognizing one or more text strings on the query image, conducting a second image search based at least in part on the one or more recognized text strings to generate one or more second candidate images, and generating a second output associated with the one or more first candidate images and the one or more second candidate images.

In certain examples, the recognizing one or more text strings on the query image comprises translating the one or more recognized text strings from a first language to a second language different from the first language, wherein the conducting a second image search based at least in part on the one or more recognized text strings comprises conducting the second image search based at least in part on the one or more translated text strings in the second language.

For example, some or all components of various embodiments of the present disclosure each are, individually and/or in combination with at least another component, implemented using one or more software components, one or more hardware components, and/or one or more combinations of software and hardware components. In another example, some or all components of various embodiments of the present disclosure each are, individually and/or in combination with at least another component, implemented in one or more circuits, such as one or more analog circuits and/or one or more digital circuits. In yet another example, while the embodiments described above refer to particular features, the scope of the present disclosure also includes embodiments having different combinations of features and embodiments that do not include all of the described features. In yet another example, various embodiments and/or examples of the present disclosure can be combined.

Additionally, the methods and systems described herein may be implemented on many different types of processing devices by program code comprising program instructions that are executable by the device processing subsystem. The software program instructions may include source code, object code, machine code, or any other stored data that is operable to cause a processing system (e.g., one or more components of a processing system) to perform the methods and operations described herein. Other implementations may also be used, however, such as firmware or even appropriately designed hardware configured to perform the methods and systems described herein.

The systems' and methods' data (e.g., associations, mappings, data input, data output, intermediate data results, final data results, etc.) may be stored and implemented in one or more different types of computer-implemented data stores, such as different types of storage devices and programming constructs (e.g., RAM, ROM, EEPROM, Flash memory, flat files, databases, programming data structures, programming variables, IF-THEN (or similar type) statement constructs, application programming interface, etc.). It is noted that data structures describe formats for use in organizing and storing data in databases, programs, memory, or other computer-readable media for use by a computer program.

The systems and methods may be provided on many different types of computer-readable media including computer storage mechanisms (e.g., CD-ROM, diskette, RAM, flash memory, computer's hard drive, DVD, etc.) that contain instructions (e.g., software) for use in execution by a processor to perform the methods' operations and implement the systems described herein. The computer components, software modules, functions, data stores and data structures described herein may be connected directly or indirectly to each other in order to allow the flow of data needed for their operations. It is also noted that a module or processor includes a unit of code that performs a software operation, and can be implemented for example as a subroutine unit of code, or as a software function unit of code, or as an object (as in an object-oriented paradigm), or as an applet, or in a computer script language, or as another type of computer code. The software components and/or functionality may be located on a single computer or distributed across multiple computers depending upon the situation at hand.

The computing system can include client devices and servers. A client device and server are generally remote from each other and typically interact through a communication network. The relationship of client device and server arises by virtue of computer programs running on the respective computers and having a client device-server relationship to each other.

This specification contains many specifics for particular embodiments. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations, one or more features from a combination can in some cases be removed from the combination, and a combination may, for example, be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Although specific embodiments of the present disclosure have been described, it will be understood by those of skill in the art that there are other embodiments that are equivalent to the described embodiments. Accordingly, it is to be understood that the disclosure is not to be limited by the specific illustrated embodiments, but only by the scope of the appended claims.

## Claims

1. A method (100) for image search, the method comprising:
receiving (110) a query image;
recognizing (115) one or more text strings on the query image;
generating (120) a query vector based on the query image;
conducting (125) a first image search based at least in part on the query vector to generate one or more first candidate images;
conducting (135) a second image search based at least in part on the one or more recognized text strings to generate one or more second candidate images; and
generating (145) a query output based on the one or more first candidate images and the one or more second candidate images;
wherein the method is performed using one or more processors.

2. The method of claim 1, wherein the recognizing one or more text strings on the query image comprises translating the one or more recognized text strings from a first language to a second language different from the first language, wherein the conducting a second image search based at least in part on the one or more recognized text strings comprises conducting the second image search based at least in part on the one or more translated text strings in the second language, wherein optionally the translating the one or more recognized text strings from a first language to a second language comprises translating the one or more recognized text strings using a machine learning model.

3. The method of claim 1 or claim 2, wherein the recognizing one or more text strings on the query image comprises recognizing the one or more text strings using an optical character recognition (OCR) algorithm.

4. The method of any preceding claim, wherein the query vector represents one or more characteristics of the query image.

5. The method of any preceding claim, wherein the conducting a first image search based at least in part on the query vector comprises:
using the query vector to select one or more candidate vectors from a search index, wherein the search index includes a plurality of candidate vectors, each candidate vector of the plurality of candidate vectors corresponding to a candidate image;
wherein the one or more candidate vectors are selected from the plurality of candidate vectors based on a vector distance between a corresponding candidate vector and the query vector.

6. The method of claim 5, wherein the one or more candidate vectors are selected based on a threshold.

7. The method of claim 5 or claim 6, further comprising:
ranking the plurality of candidate vectors based on a plurality of vector distances, each vector distance of the plurality of vector distances corresponding to a respective candidate vector and the query vector;
wherein the one or more candidate vectors are selected from the plurality of candidate vectors based at least in part on the ranking.

8. The method of any preceding claim, further comprising:
generating an explanation of the first image search, wherein the explanation includes a heatmap representing one or more focus aspects.

9. A method (200) for image search, the method comprising:
receiving (210) a query image, the query image representing a query object;
receiving (212) a query electromagnetic signal, the query electromagnetic signal being associated with the query object;
generating (220) a query vector based on the query image;
conducting (225) a first image search based at least in part on the query vector to generate one or more first candidate images;
conducting (230) a second image search based at least in part on the query electromagnetic signal to generate one or more second candidate images; and
generating (240) a query output based on the one or more first candidate images and the one or more second candidate images;
wherein the method is performed using one or more processors.

10. The method of claim 9, wherein the query vector represents one or more characteristics of the query image.

11. The method of claim 9 or claim 10, wherein the query electromagnetic signal is from an infrared image or a radar recording.

12. The method of any of claims 9 to 11, further comprising:
determining a category of the query object based at least in part on the query electromagnetic signal, wherein optionally the conducting a first image search comprises conducting the first image search based at least in part on the category of the query object.

13. A method (300) for image search, the method comprising:
receiving (305) an indication of a first computing model;
coupling (307) the first computing model to an image search pipeline;
receiving (310) a query image;
generating (320) a query vector based on the query image;
conducting (325) a first image search using the image search pipeline based at least in part on the query vector to generate one or more first candidate images; and
generating (340) an output associated with the one or more first candidate images and the one or more second candidate images;
wherein the method is performed using one or more processors.

14. The method of claim 13, further comprising:
receiving an indication of a second computing model; and
coupling the second computing model to the image search pipeline, the second computing model replacing the first computing model.

15. A system (500) for image search, the system comprising:
one or more processors; and
one or more memories storing instructions that, when executed by the one or more processors, cause the system to perform a method of any preceding claim.
